# EUROPEAN PATENT SPECIFICATION

(11) **EP 1 905 751 B1**
(45) Date of publication and mention of the grant of the patent: **18.04.2018**
(21) Application number: 06756456.7
(22) Date of filing: 23.05.2006
(51) Int. Cl.: C04B 35/5831, B23B 27/14, C04B 35/63, C04B 35/645, C04B 35/634, C04B 35/626

(54) **COMPOSITE SINTERED BODY**
VERBUNDSINTERKÖRPER
CORPS FRITTÉ COMPOSITE

(30) Priority: 15.07.2005 JP 2005207319
(43) Date of publication of application: 02.04.2008
(73) Proprietor: Sumitomo Electric Hardmetal Corp., Itami-shi, Hyogo 664-0016 (JP)
(72) Inventor: OKAMURA, Katsumi, c/o SUMITOMO ELEC HARDMETAL CORP, Itami-shi, Hyogo 664-0016 (JP); KUKINO, Satoru, c/o SUMITOMO ELEC. HARDMETAL CORP., Itami-shi, Hyogo 6640016 (JP); FUKAYA, Tomohiro, c/o SUMITOMO ELEC HARDMETAL CORP, Itami-shi, Hyogo 664-0016 (JP)
(74) Representative: Boult Wade Tennant
(86) International application number: PCT/JP2006/310200
(87) International publication number: WO 2007/010670

(56) References cited:
- EP-A1- 1 378 497
- EP-A2- 1 547 990
- JP-A- 08 126 903
- JP-A- 08 126 903
- JP-A- 10 182 242
- JP-A- 2004 160 637
- JP-A- 2005 082 815
- JP-A- 2005 187 260

## Description

### Technical Field

The present invention relates to a composite sintered body containing at least cubic boron nitride and a binder, and more specifically to a composite sintered body particularly suitably used in an application such as a cutting tool.

### Background Art

A high-hardness sintered body mainly composed of cubic boron nitride has conventionally been used in an application such as a cutting tool. Such a sintered body is normally implemented by a composite sintered body containing cubic boron nitride and a binder mainly aiming to maintain strength of the former. For example, a sintered body having a sea-island structure, in which cubic boron nitride particles (islands) are dispersed in a continuous phase (sea) of the binder (Japanese Patent Laying-Open No. 53-077811 (Patent Document 1) and Japanese Patent Laying-Open No. 10-182242 (Patent Document 2)), has been known.

Such a sea-island structure has been adopted, aiming to promote a sintered state of cubic boron nitride particles to thereby improve strength such as toughness, by not allowing contact between the cubic boron nitride particles but separating the cubic boron nitride particles from each other in order to avoid an unsintered state of cubic boron nitride caused at a contact portion where the cubic boron nitride particles physically contact with each other.

On the other hand, as the cubic boron nitride particles do not come in contact with each other but are separate from each other (that is, the structure is such that the cubic boron nitride particles are present discontinuously), such an excellent characteristic as high thermal conductivity specific to cubic boron nitride is not sufficiently exhibited, which leads to problems such as insufficient heat resistance or low toughness. Specifically, in the case that the sintered body is used in a cutting tool, increase in a temperature at a cutting edge cannot be suppressed during a cutting process. Moreover, small cracking that originated in the sintered body develops in the binder having low toughness, and chipping is more likely. Therefore, if the sintered body is employed in the cutting tool used in interrupted cutting and high-efficiency cutting such as heavy cutting and high-speed cutting, satisfactory tool life cannot sufficiently be provided in some cases.

Meanwhile, various attempts to improve a composition of the binder in order to solve the above-described problems of the sintered body have been proposed (Japanese National Patent Publication No. 60-014826 (Japanese Patent Laying-Open No. 56-069350, Patent Document 3), Japanese National Patent Publication No. 61-054857 (Japanese Patent Laying-Open No. 61-179847, Patent Document 4), Japanese National Patent Publication No. 61-054858 (Japanese Patent Laying-Open No. 61-179848, Patent Document 5), and Japanese Patent Laying-Open No. 05-287433 (Patent Document 6)). These proposals seem to achieve some effect in improving toughness, however, it has been difficult to drastically improve heat resistance, because the cubic boron nitride particles are separate from each other and the structure is discontinuous.

Meanwhile, a sintered body in which a continuous structure of cubic boron nitride particles is implemented by bonding the particles to each other has been known (United States Patent No. 5639285 Specification (Patent Document 7)). In the sintered body, as the cubic boron nitride particles exhibit the continuous structure, an effect to improve heat resistance, that is, an effect to suppress increase in the temperature at the cutting edge, can be expected to some extent. On the other hand, as the binder is scattered discontinuously around the continuous structure of the cubic boron nitride particles, the sintered body is poor in chipping resistance or crater wear resistance, and consequently it is poor in toughness.

It appears that such a defect is mainly attributed to difference in coefficient of thermal expansion between cubic boron nitride and the binder contained in the sintered body. Specifically, the cause is estimated as follows. When the cutting tool employing the sintered body is exposed to a high temperature during the cutting process, volume change occurs due to such temperature change (including not only temperature increase but also subsequent cooling). Here, the variation in the volume is considerably different between cubic boron nitride and the binder. Therefore, dissociation between cubic boron nitride and the binder occurs, and consequently, the binder or the like tends to separate from the sintered body.

Such a defect is particularly problematic in cutting a high-hardness material such as quenched steel, because exposure of the cutting edge of the cutting tool to a high temperature of 600°C or higher is more likely. In addition, improvement in productivity has recently been demanded in a cutting process operation. With the increase in a cutting speed or feed rate, the temperature at the cutting edge is often raised to a temperature around 1000°C. Solution of the problem described above has thus been desired.

In addition, a cutting process of a part having a complicated shape has increasingly been demanded. In high-efficiency cutting such as interrupted cutting involved with more complicated shape, leaving and contact (catching) of the cutting edge of the cutting tool from/with a work material is repeated, and the cutting edge is rapidly cooled when the cutting edge leaves the work material. Accordingly, the sintered body contained in the cutting edge portion experiences sudden temperature change and stress change. Therefore, in high-efficiency process or high-speed interrupted cutting of the high-hardness steel that has recently been demanded, solution of the problems as pointed out above has particularly been desired.

Under the circumstances, it has been demanded to highly attain improvement in both heat resistance and toughness of the sintered body of the cubic boron nitride. Various developments of means for meeting such a demand have been attained, however, in these developments, study has been conducted on the premise that high strength is attained by firmly bonding the cubic boron nitride to the binder contained in the sintered body. Therefore, on the premise that more advantageous bonding is obtained with a greater contact area between cubic boron nitride and the binder, at least one of cubic boron nitride and the binder has been implemented as a discontinuous structure instead of the continuous structure, in order to increase the contact area.
Patent Document 1: Japanese Patent Laying-Open No. 53-077811
Patent Document 2: Japanese Patent Laying-Open No. 10-182242
Patent Document 3: Japanese National Patent Publication No. 60-014826 (Japanese Patent Laying-Open No. 56-069350)
Patent Document 4: Japanese National Patent Publication No. 61-054857 (Japanese Patent Laying-Open No. 61-179847)
Patent Document 5: Japanese National Patent Publication No. 61-054858 (Japanese Patent Laying-Open No. 61-179848)
Patent Document 6: Japanese Patent Laying-Open No. 05-287433
Patent Document 7: United States Patent No. 5639285 Specification

JP 08126903 relates to a cutting tool made of cubic boron nitride super high pressure sintered material excellent in wear resistance. EP 1378497 relates to a sintered compact for use in machining chemically reactive materials. EP 1547990 relates to high-strength, high thermally conductive sintered compacts of cubic boron nitride.

### Disclosure of the Invention

### Problems to be Solved by the Invention

The present invention was made in view of the above-described situations. An object of the present invention is to provide a sintered body of cubic boron nitride highly attaining improvement in both heat resistance and toughness.

### Means for Solving the Problems

The present invention provides a composite sintered body according to claim 1 of the claims appended hereto. The present inventors have fundamentally reexamined the conventional premise that at least one of cubic boron nitride and the binder should be implemented as a discontinuous structure in the composite sintered body containing cubic boron nitride. As a result, the present inventors have conceived that both heat resistance and toughness may be improved if both of cubic boron nitride and the binder are implemented as the continuous structures. The present invention was completed based on this concept and further study.

A composite sintered body according to the present invention contains at least cubic boron nitride and a binder. Cubic boron nitride has a continuous structure as a result of bonding of a plurality of cubic boron nitride particles to each other. The binder has a continuous structure as a result of bonding of a plurality of binder particles to each other, that are present in a region except for a bonding interface where the cubic boron nitride particles are bonded to each other.

The binder at least contains at least one of a compound and a solid solution of any one element or two or more elements of Ti, Zr, Hf, V, and Cr and any one element or two or more elements of nitrogen, carbon, boron, and oxygen, and an aluminum compound.

The binder may be present at the bonding interface where the cubic boron nitride particles are bonded to each other at existence probability of at most 60%, and the binder may be present as a part of the continuous structure as a result of its continuity to the continuous structure of the binder particles or as a discontinuous structure isolated from the continuous structure of the binder particles.

The binder may have composition containing at least Ti or Al at the bonding interface where the cubic boron nitride particles are bonded to each other.

The binder may not be present at the bonding interface where the cubic boron nitride particles are bonded to each other.

The composite sintered body may have transverse rupture strength after acid treatment of at least 1gf/mm² to at most 70kgf/mm².

In the composite sintered body, preferably, a compound other than cubic boron nitride and Al₂O₃ is not substantially detected in X-ray diffraction measurement after acid treatment.

The cubic boron nitride may be contained in the composite sintered body by at least 60 volume % to at most 85 volume %, and the cubic boron nitride particle may have an average particle size of at least 2µm to at most 10µm.

Preferably, the composite sintered body has thermal conductivity of at least 60W/(m·K) to at most 150W/(m·K).

The aluminum compound is implemented by a compound of aluminum, oxygen and nitrogen and/or a compound of aluminum, oxygen, nitrogen, and boron, the aluminum compound has an average particle size of at least 50nm to at most 1µm, and a ratio of the aluminum compound in the binder is at least 5 volume % to at most 30 volume %. Here, the composite sintered body may have thermal conductivity of at least 70W/(m·K) to at most 150W/(m·K).

A cutting tool according to the present invention may at least partially contain the composite sintered body described above.

### Effects of the Invention

Structured as described above, the composite sintered body according to the present invention highly attains improvement in both heat resistance and toughness. As a result of improvement in toughness, in particular improvement in chipping resistance and crater wear resistance, the cutting tool at least partially containing the composite sintered body according to the present invention can suitably be used in high-efficiency process or high-speed interrupted cutting of high-hardness steel.

### Brief Description of the Drawings

Fig. 1 is a partial perspective view of a composite sintered body conceptually illustrating a manner in which a binder is present as a discontinuous structure isolated from a continuous structure of binder particles at a bonding interface where cubic boron nitride particles are bonded to each other.
Fig. 2 is a partial perspective view of a composite sintered body conceptually illustrating a manner in which a binder is present as a discontinuous structure isolated from a continuous structure of binder particles at a triple point among cubic boron nitride particles.
Fig. 3 is a schematic diagram illustrating a method of measuring transverse rupture strength.

### Description of the Reference Characters

1 cubic boron nitride particle; 2 binder particle; 3 isolated binder; 4 composite sintered body; 10 treated body; and 11 post.

### Best Modes for Carrying Out the Invention

The present invention will be described hereinafter in further detail. An embodiment hereinafter will be described with reference to the drawings, and those having the same reference characters allotted in the drawings of the subject application represent the same or corresponding elements.

### <Composite Sintered Body>

The composite sintered body according to the present invention contains at least cubic boron nitride and the binder, and it can suitably be used in an application such as a cutting tool. It is noted that the composite sintered body according to the present invention may contain other components or an inevitable impurity, so long as it contains at least cubic boron nitride and the binder.

### <Cubic Boron Nitride>

The cubic boron nitride contained in the composite sintered body according to the present invention has previously been used in an application such as the cutting tool, for its excellent hardness and thermal conductivity. In the present invention, cubic boron nitride has a continuous structure as will be described later, and cubic boron nitride is contained in the composite sintered body by at least 60 volume % to at most 85 volume %. More preferably, the lower limit of the content is set to at least 65 volume % and further preferably to at least 72 volume %. More preferably, the upper limit of the content is set to at most 80 volume % and further preferably to at most 77 volume %.

If the ratio of cubic boron nitride is less than 60 volume %, sufficient contact between the cubic boron nitride particles may not be attained. In such a case, as the continuous structure which will be described later may not sufficiently be obtained, increase in the temperature at the cutting edge cannot sufficiently be suppressed, and hence an effect of sufficient improvement in heat resistance may not be obtained. On the other hand, if the ratio of cubic boron nitride exceeds 85 volume %, an amount of the binder present in the sintered body, which will be described later, relatively decreases, and wear resistance may remarkably be lowered.

Such volume percentage can be achieved by setting volume percentage of the cubic boron nitride powder used in manufacturing the composite sintered body to a value in the above-described range (that is, from at least 60 volume % to at most 85 volume %). The volume percentage can be measured by subjecting the composite sintered body to quantitative analysis using ICP (inductively coupled plasma spectrochemical analysis) or observation using an SEM (scanning electron microscope) or a TEM (transmission electron microscope).

Preferably, the cubic boron nitride particle has an average particle size of at least 2µm to at most 10µm. If the average particle size is smaller than 2µm, a surface area of the cubic boron nitride particle becomes greater. Accordingly, the number of bonded portions between the cubic boron nitride particles (sometimes called neck growth) excessively increases, and the binder which will be described later enters a multiple point such as a triple point or a quadruple point among the cubic boron nitride particles (referring not to the contact interface between the cubic boron nitride particles but to a gap between the cubic boron nitride particles; hereinafter simply denoted as the triple point), and the existence probability of the discontinuously isolated binder increases. In addition, as the interface increases, the thermal conductivity may be lowered. Meanwhile, if the average particle size exceeds 10µm, strength of the composite sintered body is lowered. Accordingly, when the composite sintered body is used in the cutting tool, the cutting edge may be chipped in a severe cutting environment. More preferably, the lower limit of the average particle size is set to at least 2.5µm and further preferably to at least 2.8µm. More preferably, the upper limit of the average particle size is set to at most 6µm and further preferably to at most 3.8µm.

### <Binder>

The binder according to the present invention mainly attains a function to hold the cubic boron nitride described above, and a composition thereof is according to claim 1 of the claims appended hereto.

The binder contains at least one of a compound and a solid solution of any one element or two or more elements of Ti, Zr, Hf, V, and Cr and any one element or two or more elements of nitrogen, carbon, boron, and oxygen, and an aluminum compound. This compound or solid solution of these elements can achieve high bonding strength with the cubic boron nitride and it is chemically stable. Therefore, the compound or solid solution is excellent in wear resistance and preferable.

More specifically, any one or more of a nitride, a carbide, a carbonitride, a boride, an oxide, and a solid solution of any one element or two or more elements of Ti, Zr, Hf, V, and Cr may be employed as the compound or solid solution, and more preferably, at least one of a nitride, a boride, an oxide, and a solid solution of any one element or two or more elements of Ti, Zr, Hf, V, and Cr may be employed. This compound or solid solution may be employed because it can attain particularly high bonding strength with cubic boron nitride.

Examples of the aluminum compound include AlN, AlB₂, Al₂O₃, and the like. The aluminum compound is implemented by a compound of aluminum, oxygen and nitrogen and/or a compound of aluminum, oxygen, nitrogen, and boron. The aluminum compound has an average particle size of at least 50nm to at most 1µm, and a ratio of the aluminum compound in the binder (the total amount) is set to at least 5 volume % to at most 30 volume %.

When AlN is used as the aluminum compound, improvement in heat resistance can be expected, because AlN is a material excellent in thermal conductivity, as used in a heat sink. Meanwhile, AlN has low strength. Therefore, if a large amount of AlN is present in the composite sintered body, cracking originates from AlN and toughness is lowered. In the case of employing Al₂O₃, as can be seen from the fact that Al₂O₃ alone is used as a ceramic tool, Al₂O₃ has high hardness and is stable at a high temperature, whereas it is poor in thermal conductivity. Therefore, use of a large amount of Al₂O₃ leads to lowering in thermal conductivity of the composite sintered body and to lowering in heat resistance.

In contrast, the compound of aluminum, oxygen and nitrogen and/or the compound of aluminum, oxygen, nitrogen, and boron are superior to AlN and Al₂O₃ in strength and superior to Al₂O₃ in thermal conductivity. Therefore, if the compound having the average particle size of at least 50nm to at most 1µm is contained in the binder by at least 5 volume % to at most 30 volume %, the binder excellent in strength and thermal conductivity can be provided, which contributes to improvement in toughness and heat resistance of the composite sintered body. Therefore, particularly if such an aluminum compound is present in a manner satisfying the conditions above, the composite sintered body can have thermal conductivity, which will be described later, of at least 70W/(m·K) to at most 150W/(m·K).

Moreover, according to the study conducted by the present inventors, the compound of aluminum, oxygen, nitrogen, and boron is selectively present around the cubic boron nitride particles. Therefore, it is estimated that cubic boron nitride supplies nitrogen and boron composing the compound, which seems to serve to strengthen bonding between cubic boron nitride and the binder. It is thus estimated that presence of the compound contributes to significant improvement in toughness of the composite sintered body.

If the average particle size is smaller than 50nm, an effect of improvement in thermal conductivity may be lowered due to increase in the interface. Meanwhile, if the average particle size exceeds 1µm, strength may be lowered. Preferably, the average particle size is set to at least 80nm to at most 0.7µm. If the ratio described above is smaller than 5 volume %, an effect of improvement in strength and thermal conductivity as described above is not obtained and an effect in improvement in bonding strength with cubic boron nitride may not sufficiently be obtained. If the ratio exceeds 30 volume %, the content of a binder component having relatively good toughness other than the aluminum compound is lowered and toughness of the composite sintered body may be lowered. Preferably, the ratio is set to at least 10 volume % to at most 27 volume %. The volume percentage can be measured in quantitative analysis using ICP (inductively coupled plasma spectrochemical analysis) or observation using an SEM (scanning electron microscope) or a TEM (transmission electron microscope).

The compound of aluminum, oxygen and nitrogen is preferably expressed as general formula Al_{X}O_{Y}N_{Z} (where X=0.5 and Y+Z≤0.5), and the compound of aluminum, oxygen, nitrogen, and boron is preferably expressed as general formula Al_{S}B_{T}O_{U}N_{V} (where S+T=0.5 and U+V≤0.5). In the following, these compounds may simply be expressed as general formula Al_{X}O_{Y}N_{Z} and general formula Al_{S}B_{T}O_{U}N_{V}.

### <Continuous Structure>

In the composite sintered body according to the present invention, cubic boron nitride has the continuous structure as a result of bonding of a plurality of cubic boron nitride particles to each other, and the binder has the continuous structure as a result of bonding of a plurality of binder particles to each other, that are present in a region except for the bonding interface where the cubic boron nitride particles are bonded to each other. The composite sintered body is manufactured by sintering cubic boron nitride and the binder, and both of these have the continuous structure as described above. Therefore, the cubic boron nitride and the binder are firmly bonded to each other.

The composite sintered body according to the present invention adopts such a continuous structure. Therefore, even if the composite sintered body is used in the cutting tool to which a severe cutting condition (such as high-efficiency process, high-speed interrupted cutting or the like of the high-hardness steel described above) is applied, the composite sintered body can exhibit sufficient heat resistance and toughness and provide satisfactory tool life.

Namely, in the composite sintered body of the present invention, first of all, the binder or the like does not fall off from the composite sintered body even under the condition as in interrupted cutting where sudden temperature change is repeated, and hence toughness can drastically be improved. Such falling off as in the conventional example is considered to be attributable to difference in the coefficient of thermal expansion between cubic boron nitride and the binder as described already. Even if a small cracking due to difference in the coefficient of thermal expansion between cubic boron nitride and the binder takes place at the time of change in the temperature, falling off is effectively prevented because the binder has the continuous structure.

In addition, as both of cubic boron nitride and the binder have the continuous structure as described above, as compared with the structure in which the binder is scattered discontinuously as in the conventional example, bonding strength between cubic boron nitride and the binder can further be firm. This is considered to be attributable to the continuous structure, and considered as an advantageous effect fundamentally overturning the conventional knowledge, that is, the conventional technical knowledge that any one of cubic boron nitride and the binder is scattered discontinuously in order to increase the contact area therebetween and to thereby achieve firm bonding.

Moreover, as cubic boron nitride has the continuous structure, excellent characteristic of high hardness and high thermal conductivity specific to cubic boron nitride can sufficiently be exhibited, thus showing excellent toughness and heat resistance. It is considered that, as the continuous structure of cubic boron nitride exhibits an excellent heat dissipation effect, temperature increase is suppressed and heat resistance is significantly improved, and that as development of small cracking that has occurred within the composite sintered body is prevented by the continuous structure of cubic boron nitride, toughness may further be improved.

With regard to exhibition of high thermal conductivity, more specifically, the composite sintered body according to the present invention has thermal conductivity of at least 60W/(m·K) to at most 150W/(m·K). As the thermal conductivity is higher, temperature increase at the cutting edge during cutting is suppressed. Therefore, higher thermal conductivity is preferred. If thermal conductivity exceeds 150W/(m·K), however, bonded area of the cubic boron nitride particles excessively increases. Consequently, the binder enters the triple point of the cubic boron nitride particles, and existence probability of the discontinuously isolated binder increases, which is not preferred. It is noted that thermal conductivity can be calculated by measuring thermal diffusivity with a laser flash or xenon flash thermal diffusivity measurement apparatus, based on specific heat and density.

Here, the expression "has the continuous structure as a result of bonding of a plurality of cubic boron nitride particles to each other" refers to a structure completely different from the sea-island structure (Patent Documents 1, 2) in which the cubic boron nitride particles are dispersed in the continuous binder phase as in the conventional example, and refers to the continuous structure exhibited as a result of bonding of the cubic boron nitride particles to each other. The continuous structure is considered to exhibit a three-dimensional structure in which cubic boron nitride particles are three-dimensionally bonded to each other.

Meanwhile, the expression "has the continuous structure as a result of bonding of a plurality of binder particles to each other, that are present in a region except for the bonding interface where the cubic boron nitride particles are bonded to each other" refers to a structure completely different from the structure (Patent Document 7) in which the binder is discontinuously scattered around the structure obtained as a result of bonding of the cubic boron nitride particles to each other as in the conventional example, and refers to the continuous structure exhibited as a result of bonding of the binder particles to each other. The continuous structure is considered to exhibit a three-dimensional structure in which binder particles are three-dimensionally bonded to each other.

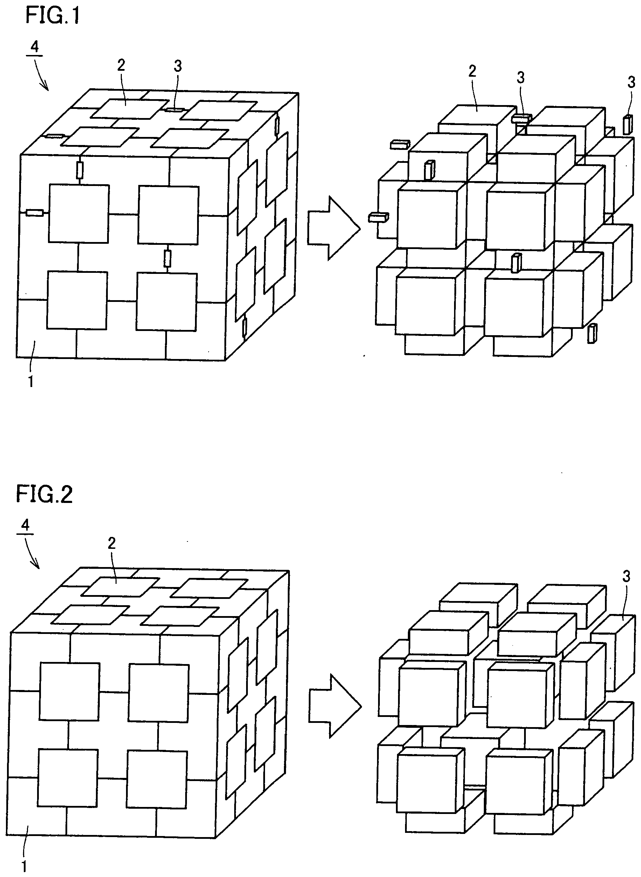

Here, the reason why the region where the binder particles constituting the continuous structure are present is defined as the region except for the bonding interface where the cubic boron nitride particles are bonded to each other is to clarify that the composite sintered body of the subject application includes a structure in each manner as described below. Specifically, if the binder is present at the bonding interface where such cubic boron nitride particles are bonded to each other, the manner of presence of the binder includes any one or both of a manner of presence as a part of the continuous structure as a result of its continuity to the continuous structure of the binder particles and a manner of presence as the discontinuous structure isolated from the continuous structure of the binder particles as shown in Fig. 1. In addition, it is also clarified that, if the binder is not present at the bonding interface between such cubic boron nitride particles, the composite sintered body of the subject application may also encompass such a manner that the binder is not present,

Fig. 1 is a partial perspective view of a composite sintered body 4 conceptually illustrating a manner in which the binder is present as the discontinuous structure isolated from the continuous structure of binder particles 2 at the bonding interface where cubic boron nitride particles 1 are bonded to each other. Namely, Fig. 1 shows, on the right with respect to the central arrow, the manner in which cubic boron nitride particles 1 are conceptually removed from composite sintered body 4 shown on the left, and shows on the right that the binder at the bonding interface is present as an isolated binder 3.

If the binder is present at the bonding interface between the cubic boron nitride particles, preferably, the binder is present at the existence probability of at most 60%, and the binder is present as a part of the continuous structure as a result of its continuity to the continuous structure of the binder particles or as the discontinuous structure isolated from the continuous structure of the binder particles. Preferably, the binder at the bonding interface where the cubic boron nitride particles are bonded to each other has composition containing at least Ti or Al. It is most preferable from a point of view of thermal conductivity that the cubic boron nitride particles can directly be bonded to each other firmly, without including the binder at the bonding interface. However, if the existence probability of the binder at the bonding interface between the cubic boron nitride particles is set to 60% or lower, lowering in thermal conductivity can be minimized by ensuring continuity between the cubic boron nitride particles. If the binder is composed of a component containing Ti or Al element having high affinity to oxygen, the component serves as a getter of adsorbed oxygen that has remained at the bonding interface between the cubic boron nitride particles during sintering. Therefore, alteration of the cubic boron nitride particles themselves resulting from solid solution of oxygen in cubic boron nitride or increase in thermal resistance due to generation of an oxidized phase at the bonding interface between the cubic boron nitride particles can be prevented. If the existence probability exceeds 60%, a large amount of binder having thermal conductivity lower than cubic boron nitride is present and thermal conductivity of the composite sintered body as a whole is lowered, which is not preferred. As such, as described above, it is particularly preferable that the binder is not present at the bonding interface between the cubic boron nitride particles. Here, the existence probability of 60% or lower means that the binder is detected at measurement points accounting for at most 60% of all measurement points when AES (Auger electron spectroscopy) analysis or EDS (energy dispersive X-ray spectroscopy) analysis is conducted at a plurality of measurement points at one bonding interface between the cubic boron nitride particles.

In the description above, the expression "the cubic boron nitride particles or the binder particles are bonded to each other" means that, though crystal orientation of each particle may be different from each other, the particles are firmly bonded to each other at the bonding interface between the particles as a result of some kind of chemical bond or physical bond, or involvement of a third compound. In addition, the expression "the cubic boron nitride and the binder are bonded to each other" in the description above means that the cubic boron nitride and the binder are firmly bonded to each other as a result of some kind of chemical bond or physical bond, or involvement of a third compound, as in the case of bonding between the particles above.

The continuous structure obtained as a result of bonding of a plurality of cubic boron nitride particles to each other and the continuous structure obtained as a result of bonding of a plurality of binder particles to each other, that are present in a region except for the bonding interface where the cubic boron nitride particles are bonded to each other, can be confirmed by subjecting the composite sintered body to acid treatment, thereafter subjecting the treated body to XRD (X-ray diffraction) measurement, visually observing appearance of the treated body, and measuring transverse rupture strength.

Here, initially, the acid treatment refers to a treatment in which a mixed acid obtained by mixing concentrated nitric acid (60%), distilled water and concentrated hydrofluoric acid (47%) at a volume ratio of 2:2:1 and the composite sintered body cut into a prescribed size (in a rectangular shape of length 6mm × width 3mm × thickness 0.5mm) are placed in an airtight container and the composite sintered body is dissolved under pressure for 48 hours at a temperature of 140°C.

Successively, the "treated body" subjected to "acid treatment" is in turn subjected to XRD measurement. If the binder component is not detected in the measurement, it indicates that the binder has completely been removed from the composite sintered body, and the continuous structure of the binder is confirmed. The mixed acid serves to selectively dissolve the binder and remove solely the binder. If the binder is implemented as the discontinuous structure instead of the continuous structure according to the subject application, it is considered that the isolated binder structured like an island and surrounded by the cubic boron nitride is present as shown in Fig. 2 and the isolated binder is not dissolved and removed in the acid treatment but remains in the treated body. Consequently, the binder component is detected in the XRD measurement. It is noted that, in addition to cubic boron nitride, Al₂O₃ is not dissolved and removed either in the acid treatment, and if the binder contains Al₂O₃, a trace amount of Al₂O₃ may be detected. In such a case, however, as there is no possibility that the binder is composed solely of Al₂O₃, determination as to whether the binder exhibits the continuous structure can be made based on detection of other component composing the binder. Therefore, in the composite sintered body according to the present invention, particularly preferably, a compound other than cubic boron nitride and Al₂O₃ is not substantially detected in the X-ray diffraction measurement after the acid treatment.

Fig. 2 is a partial perspective view of composite sintered body 4 conceptually illustrating a manner in which the binder is present as the discontinuous structure isolated from the continuous structure of binder particles 2 at the triple point among cubic boron nitride particles 1. Namely, Fig. 2 shows, on the right with respect to the central arrow, the manner in which cubic boron nitride particles 1 are conceptually removed from composite sintered body 4 shown on the left, and shows on the right that binder particles 2 is present as isolated binder 3.

If the binder is present as the discontinuous structure isolated from the continuous structure of the binder particles at the bonding interface between the cubic boron nitride particles as shown in Fig. 1, the binder may be detected as the binder component in the X-ray diffraction measurement. Accordingly, if the binder component is detected in this manner, origin of the binder component, that is, whether the binder is present as the discontinuous structure at the bonding interface between the cubic boron nitride particles (Fig. 1) or as the isolated, discontinuous structure like an island surrounded by the cubic boron nitride particles (Fig. 2), can be determined by measuring the transverse rupture strength after the acid treatment which will be described later. Detailed description will be provided later.

Thereafter, appearance of the treated body is visually observed. If the cubic boron nitride does not have the continuous structure as above but has the discontinuous structure as in the conventional example, the treated body becomes powdery and collapses after the acid treatment, and exhibits appearance completely different from the composite sintered body prior to treatment. In contrast, if the cubic boron nitride has the continuous structure as above, the treated body maintains the original shape exhibited prior to the acid treatment. Here, the expression "maintains the original shape" means that the original body is not divided into two or more parts in a handling under the load lower than 1gf/mm² in a normal filtration operation or the like. In this manner, the continuous structure of cubic boron nitride can be confirmed by visually observing the appearance of the treated body after the acid treatment.

If cubic boron nitride apparently has the continuous structure but the particles simply come in contact with each other instead of bonding to each other, bonding strength between the particles is weak, although the original shape is maintained to some extent after the acid treatment. Accordingly, an edge portion of the treated body is partially detached during the acid treatment, or the treated body readily collapses in the handling under the stress lower than 1gf/mm². Therefore, difference from the continuous structure of the subject application can readily be found.

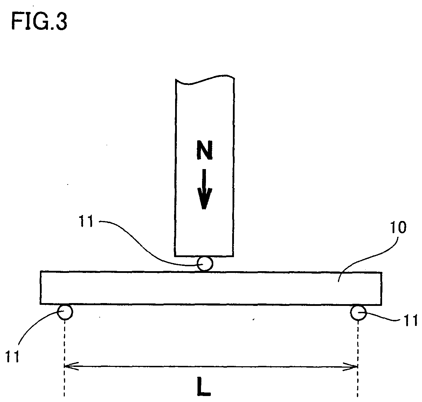

Successively, transverse rupture strength of the treated body is measured. In the measurement, as shown in Fig. 3, a condition that three points in a treated body 10 in a rectangular shape (length 6mm × width 3mm × thickness 0.5mm) are supported by three posts 11 (diameter 2mm) and span L is set to 4mm is adopted. Then, a load N is applied to an intermediate portion of span L, and load N at the time when treated body 10 is broken is measured as the transverse rupture strength. In the present invention, preferably, the transverse rupture strength attains to a value from at least 1gf/mm² to at most 70kgf/mm². The high transverse rupture strength is shown because the cubic boron nitride has the continuous structure as described above, and if the cubic boron nitride is implemented as the discontinuous structure, the transverse rupture strength is lower than 1gf/mm². Here, higher transverse rupture strength is preferred, and it is not necessary to define the upper limit thereof. If the transverse rupture strength exceeds 70kgf/mm², however, the number of bonding interfaces present between the cubic boron nitride particles becomes excessively large, and it is more likely that the binder is discontinuously taken in the triple point of the cubic boron nitride particles. Specifically, if the binder is present as the isolated, discontinuous structure like an island surrounded by the cubic boron nitride particles (Fig. 2) as described above, the transverse rupture strength attains to a value exceeding 70kgf/mm². In contrast, if the transverse rupture strength attains to 70kgf/mm² or lower in spite of detection of the binder component after the acid treatment, it indicates that the binder is present as the discontinuous structure at the bonding interface between the cubic boron nitride particles (Fig. 1).

### <Method of Manufacturing Composite Sintered Body>

The composite sintered body according to the present invention can be manufactured in the following manner. Initially, cubic boron nitride powders and binder powders that are raw material powders are mixed. The mixture is sintered under the condition of pressure and temperature at which cubic boron nitride is not converted to hexagonal boron nitride, or the binder component is externally infiltrated into the mixture during sintering under the condition of pressure and temperature at which cubic boron nitride is not converted to hexagonal boron nitride.

Here, preferably in sintering the mixed powders, when the mixed powders are filled in a capsule made of refractory metal (for example, a capsule made of Mo (molybdenum)) for fabricating a sintered body, the mixed powders are filled such that they are sandwiched by metal foils made of an alloy of Ti and Al, and then sintered. The metal foil serves to implement the binder and has a melting point not higher than the sintering temperature. Accordingly, the metal foil turns to liquid during sintering and permeates through the mixed powders, whereby both of the cubic boron nitride particles and the binders can attain the continuous structure. In addition, it is not that the all binder components are mixed with the cubic boron nitride powders in advance but that the binder component is externally infiltrated into the mixed powders of the cubic boron nitride powders and (a relatively small amount of) binder powders during sintering. Therefore, the composite sintered body according to the present invention achieving further improved continuity between the cubic boron nitride particles and between the binder particles can be manufactured. Particularly, as the alloy permeates through a small gap between the cubic boron nitride particles, the binder present at the triple point of the cubic boron nitride particles is not isolated and continuity of the structure of the binder is enhanced.

Conditions such as pressure history and temperature history should preferably be controlled such that a prescribed condition for pressure and temperature at which cubic boron nitride is thermodynamically stable is set during sintering. Before specifically describing the conditions in the subject application, initially, a general condition for obtaining a sintered cubic boron nitride body will be described. Initially, pressure is applied to the mixed powders of cubic boron nitride and the binder as described above at a low temperature so as to promote consolidation, and thereafter the mixed powders are sintered at a raised temperature. For example, after the pressure is raised to 4 to 6GPa at a room temperature, the temperature is raised to 1300 to 1800°C. Sintering is performed with the highest temperature being maintained.

Under the conventional sintering condition as above, however, it is considered as follows. Specifically, the binder having low hardness is mainly broken during application of pressure, and the broken, fine binder slides in between the cubic boron nitride particles. In addition, the cubic boron nitride particles having high hardness and less likely to be broken than the binder are arranged to surround the binder, thus forming the triple point. Then, the mixed powders are sintered by heating while consolidation in that small region no longer proceeds. Consequently, it is estimated that a texture structure of the sintered body in which the region where the binder is introduced in between the cubic boron nitride particles or the binder region having the discontinuous structure surrounded by the cubic boron nitride particles are scattered is created.

Here, the following conditions are adopted as specific conditions for a sintering method of the subject application. Initially, the pressure and the temperature are once raised to 2 to 5GPa and 1000 to 1500°C respectively, at which cubic boron nitride is thermodynamically stable (pressurization and temperature increase are simultaneously performed), and this pressure and temperature condition is maintained for 1 to 5 minutes. Sintering thus initially proceeds simultaneously with consolidation, in a portion where the cubic boron nitride particles come in contact with each other. Here, it is considered that the binder is softened and plastically deforms along with temperature increase, and that fluidity is enhanced. Therefore, it is considered that the binder slides into the gap (permeates) between the cubic boron nitride particles even when the cubic boron nitride particles are arranged to surround the binder, and thus the continuous structure is maintained.

After both of cubic boron nitride and the binder have attained the continuous structure as described above, the pressure and the temperature are again raised to 5 to 8GPa and 1400 to 2000°C respectively, at which cubic boron nitride is still thermodynamically stable (pressurization and temperature increase are simultaneously performed), and this pressure and temperature condition is maintained for 1 to 15 minutes. It is estimated that bonding strength between the cubic boron nitride particles, between the binder particles, and between the cubic boron nitride particles and the binder particles is thus further strengthened.

It is noted that bonding strength between the cubic boron nitride particles, between the binder particles, and between the cubic boron nitride particles and the binder particles can further be strengthened by reforming the surface of the cubic boron nitride particles and the binder particles. Here, surface reformation is performed, for example, through plasma treatment in hydrogen or heat treatment in an ammonia atmosphere, of raw material powders before sintering. Alternatively, in order to strengthen direct bonding between the cubic boron nitride particles, it is also effective to add a compound of carbon, hydrogen and nitrogen, such as melamine, that has a catalytic action on the mixed powders before sintering.

### <Cutting Tool>

The cutting tool according to the present invention at least partially contains the composite sintered body described above. For example, a cutting-edge nose portion serving as a central point of application in cutting may be formed from the composite sintered body. Alternatively, a cutting edge portion may be formed from the composite sintered body, or the entire surface of a rake face including the cutting edge portion may be formed from the composite sintered body. Further alternatively, the cutting tool in its entirety may be formed from the composite sintered body.

As described above, the structure of the cutting tool according to the present invention is not particularly limited, so long as the structure at least partially contains the composite sintered body. In the case that a part of the cutting tool is formed from the composite sintered body according to the present invention, any conventionally known base material used as the base material for the cutting tool of this type can implement the remaining part. As such a base material, for example, hardmetal (such as WC-based hardmetal, a material containing Co in addition to WC, or a material to which carbonitride of Ti, Ta, Nb, or the like is further added), cermet (mainly composed of TiC, TiN, TiCN, or the like), high-speed steel, ceramics (titanium carbide, silicon carbide, silicon nitride, aluminum nitride, aluminum oxide, and a mixture thereof), sintered diamond, sintered silicon nitride, or the like is employed.

### <Example>

In the following, the present invention will be described in detail with reference to examples, however, the present invention is not limited thereto Examples 1-8 are reference examples and are not part of the invention.

### <Example 1>

Initially, Ti_{X}N_{Y} (where X=0.5 and Y=0.25) powders and Al powders were homogenously mixed at a mass ratio of 80:20, and thereafter the mixed powders were subjected to heat treatment for 30 minutes at a temperature of 1200°C in vacuum using a vacuum furnace. Thereafter, a ball mill constituted of a pot made of hardmetal and a ball made of hardmetal was used to break the mixed powders that were subjected to heat treatment as described above, thus obtaining the raw material powders for the binder.

Successively, the raw material powders for the binder obtained as above and the cubic boron nitride powders having an average particle size of 3.8µm were homogenously mixed using the ball mill, at such a blending ratio that the cubic boron nitride powders accounted for 70 volume %. Thereafter, the mixed powders were held in the vacuum furnace for 20 minutes at a temperature of 900°C for degassing.

Then, the mixed powders degassed as described above were sandwiched between the metal foils made of TiAl alloy (Ti (50 atomic %) Al (50 atomic %)) and filled in the capsule made of molybdenum (Mo). Thereafter, the pressure and the temperature were simultaneously raised to 3GPa and 1200°C using an ultra-high pressure apparatus respectively, and the mixed powders were maintained for 2 minutes under this pressure and temperature condition.

Successively, the pressure and the temperature were again simultaneously raised to 6.2GPa and 1750°C using this apparatus respectively, and the mixed powders were maintained for 15 minutes under this pressure and temperature condition for sintering. The composite sintered body according to the present invention at least containing cubic boron nitride and the binder was thus manufactured.

The composition of the composite sintered body was specified in XRD measurement (for the sake of convenience, denoted as initial XRD measurement) and thermal conductivity thereof was measured. Measurement of thermal conductivity was performed before the acid treatment which will be described later. Specifically, after the composite sintered body obtained as above was formed in a shape of isosceles triangle having a vertex angle of 80°, a base of 4mm and a thickness of 1mm, thermal diffusivity was measured with a laser flash thermal diffusivity measurement apparatus, and thermal conductivity was calculated based on specific heat and density. Successively, the composite sintered body was subjected to TEM (transmission electron microscope) observation, and EDS analysis and AES analysis, so as to conduct element analysis at the bonding interface between the cubic boron nitride particles, thus calculating the composition (type of the element) and the existence probability of the binder present at the bonding interface. Table 1 below shows the result. It is noted that, in Table 1, TiN (Ti_{X}N_{Y} above is simply denoted as TiN; denoted similarly hereinafter), TiB₂, AlN, and AlB₂ other than cubic boron nitride are components composing the binder. Though these components are different from the composition of the raw material powders for the binder above, it is considered to be attributable to chemical reaction to cubic boron nitride during sintering.

Successively, after the composite sintered body according to the present invention manufactured as above was formed in a rectangular shape having length 6mm × width 3mm × thickness 0.5mm, the composite sintered body was subjected to acid treatment (as described above, the treatment in which the mixed acid obtained by mixing concentrated nitric acid (60%), distilled water and concentrated hydrofluoric acid (47%) at a volume ratio of 2:2:1 was used and dissolution under pressure was performed for 48 hours at a temperature of 140°C). Then, XRD measurement of the treated body subjected to acid treatment in this manner was performed to specify the composition after acid treatment, and appearance was visually observed. Table 1 below shows the result.

Successively, the transverse rupture strength of the treated body above was measured, using the method described with reference to Fig. 3. Table 1 below shows the result.

Meanwhile, the cutting tool was fabricated using the composite sintered body manufactured as above (before acid treatment). Specifically, the composite sintered body manufactured as above was brazed to a base material made of hardmetal and formed in a prescribed shape (ISO model No. SNGA120408), to fabricate the cutting tool. Using this cutting tool, a cutting test in which quenched steel is subjected to high-speed interrupted cutting was conducted under the conditions below, so as to determine the tool life until it is chipped. Table 1 below shows the result.

### <Condition for Cutting Test>

Work material: Carburized and quenched steel SCM415H, HRC62
   (diameter 100mm × length 300mm; 6 V-shaped grooves in axial direction of the work material)
Cutting speed: V=200m/min.
Feed rate: f=0.15mm/rev.
Depth of cut: d=0.3mm
Wet/Dry: Dry

### <Examples 2 to 3>

The composite sintered body according to the present invention was manufactured as in Example 1, except that Zr_{X}N_{Y} (where X=0.5 and Y=0.25) powders (Example 2) or Ti_{X}C_{Y}N_{Z} (where X=0.5 and Y=Z=0.125) powders (Example 3) were used instead of Ti_{X}N_{Y} (where X=0.5 and Y=0.25) powders in Example 1. Table 1 below shows each performance obtained as a result of measurement or test as in Example 1.

### <Examples 4 to 5>

The composite sintered body according to the present invention was manufactured as in Example 1, except that blending ratio of the cubic boron nitride powders was changed to 75 volume % (Example 4) or to 65 volume % (Example 5) instead of 70 volume % in Example 1. Table 1 below shows each performance obtained as a result of measurement or test as in Example 1.

### <Comparative Example 1>

The composite sintered body according to the comparative example was manufactured as in Example 1, except that the metal foil made of TiAl alloy (Ti (50 atomic %) Al (50 atomic %)) was not used in filling the capsule made of molybdenum (Mo) with the mixed powders and except that sintering was performed for 15 minutes under such a condition that the pressure was raised to 5GPa at a room temperature and thereafter the temperature was raised to 1500°C as in the conventional method, instead of the condition for sintering in Example 1. Table 1 below shows each performance obtained as a result of measurement or test as in Example 1.

### <Comparative Example 2>

The composite sintered body according to the comparative example was manufactured as in Comparative Example 1, except that blending ratio of the cubic boron nitride powders was changed to 85 volume %, instead of 70 volume % in Comparative Example 1. Table 1 below shows each performance obtained as a result of measurement or test as in Example 1.

### <Comparative Examples 3 to 5>

A commercially available cutting tool having a shape (ISO model No. SNGA120408) the same as that of the cutting tool in Example 1 obtained by brazing the composite sintered body of cubic boron nitride to the base material made of hardmetal was prepared, and Table 1 below shows each performance obtained as a result of measurement or test as in Example 1. The volume percentage of cubic boron nitride in the composite sintered body was measured using the SEM (scanning electron microscope).

**Table 1**

| No. | | cBN [volume %] | Thermal Conductivity [W/(m·K)] | Binder Present at Bonding Interface Between cBN Particles | | Initial XRD Measurement | XRD Measurement After Acid Treatment | Appearance After Acid Treatment | Transverse Rupture Strength After Acid Treatment | Tool Life In Cutting Test |
|---|---|---|---|---|---|---|---|---|---|---|
| | | | | Element | Existence Probability [%] | | | | | |
| Example | 1 | 70 | 72 | Ti, Al | 45 | cBN, TiN, TiB₂, AlN, AlB₂, Al₂O₃ | cBN, Al₂O₃ | original shape maintained | 10.2 [gf/mm²] | 6.5 minutes |
| | 2 | 70 | 63 | Ti, Al | 57 | cBN, ZrN, ZrB₂, AlN, AlB₂, Al₂O₃ | cBN, Al₂O₃ | original shape maintained | 5.7 [gf/mm²] | 3.5 minutes |
| | 3 | 70 | 66 | Ti, Al | 55 | cBN, TiCN, TiB₂, AlN, AlB₂, Al₂O₃ | cBN, Al₂O₃ | original shape maintained | 7.6 [gf/mm²] | 4.1 minutes |
| | 4 | 75 | 75 | Ti, Al | 50 | cBN, TiN, TiB₂, AlN, AlB₂, Al₂O₃ | cBN, Al₂O₃ | original shape maintained | 12.8 [gf/mm²] | 7.1 minutes |
| | 5 | 65 | 68 | Ti, Al | 60 | cBN, TiN, TiB₂, AlN, AlB₂, Al₂O₃ | cBN, Al₂O₂ | original shape maintained | 3.2 [gf/mm²] | 3.2 minutes |
| Comparative Example | 1 | 70 | 55 | - | - | cBN, TiN, TiB₂, AlN, AlB₂, Al₂O₃ | cBN, Al₂O₃ | collapsed | not available | 1.0 minutes |
| | 2 | 85 | 68 | Ti, Al | 65 | cBN, TiN, TiB₂, AlN, AlB₂, Al₂O₃ | cBN, TiN, TiB₂, AlN, AlB₂, Al₂O₃ (except for cBN, trace amount was detected) | original shape maintained | 80 [kgf/mm²] | 1.0 minutes |
| | 3 | 70 | 57 | - | - | cBN, TiN, TiB₂, AlN, AlB₂, Al₂O₃ | cBN, Al₂O₃ | edge portion peeled off | not available | 1.5 minutes |
| | 4 | 65 | 52 | - | - | cBN, TiN, TiB₂, AlN, AlB₂, Al₂O₃ | cBN, Al₂O₃ | collapsed | not available | 0.7 minutes |
| | 5 | 55 | 41 | - | - | cBN, TiN, TiB₂, AlN, AlB₂, Al₂O₃ | cBN, Al₂O₃ | collapsed | not available | 0.5 minutes |

| | | | | | | | | | | |
|---|---|---|---|---|---|---|---|---|---|---|
| In the table above, "cBN" represents "cubic boron nitride." | | | | | | | | | | |

As can clearly be seen from Table 1, in the composite sintered bodies according to Examples 1 to 5, solely cubic boron nitride was detected in XRD measurement after acid treatment (although Al₂O₃ was partially contained). This fact indicates that the binder has the continuous structure as a result of bonding of a plurality of binder particles to each other. In addition, this fact simultaneously indicates that the binder having the discontinuous structure is not present at the bonding interface where the cubic boron nitride particles are bonded to each other. Here, it has been confirmed through TEM observation, EDS analysis and AES analysis that the binder is present at the bonding interface. Therefore, the fact simultaneously indicates that the binder present at the bonding interface is present as a part of the continuous structure as a result of its continuity to the continuous structure of the binder particles. This fact is also supported by the transverse rupture strength after the acid treatment that attains to a value from at least 1gf/mm² to at most 70kgf/mm².

In addition, appearance of the treated body after acid treatment was visually observed. The composite sintered bodies according to Examples 1 to 5 fully maintained their original shapes, and transverse rupture strength also attained to the value from at least 1gf/mm² to at most 70kgf/mm². Therefore, this fact indicates that cubic boron nitride has the continuous structure as a result of bonding of a plurality of cubic boron nitride particles to each other.

On the other hand, in Comparative Example 1, collapse of the shape was confirmed in observation of appearance after acid treatment. Therefore, this fact indicates that the cubic boron nitride particles have the discontinuous structure, not the continuous structure. Accordingly, the comparative example has lower thermal conductivity and poorer tool life in the cutting test, as compared with those in the examples. For this reason, the composition and the existence probability of the binder at the bonding interface between the cubic boron nitride particles could not be measured (therefore, denoted as "-" in Table 1).

In Comparative Example 2, the original shape was maintained when appearance after acid treatment was observed. Therefore, it is considered that the apparently continuous structure in which the cubic boron nitride particles were bonded to each other was attained. On the other hand, a trace amount of the binder component (TiN, TiB₂, AlN, AlB₂, Al₂O₃) was detected in XRD measurement after acid treatment, and transverse rupture strength after acid treatment exceeded 70kgf/mm². Therefore, this fact indicates that the binder is present as the isolated, discontinuous structure surrounded by the continuous structure of cubic boron nitride. Therefore, the tool life in the cutting test was poor.

In Comparative Examples 3 to 5, it was confirmed, by visually observing appearance of the treated body after acid treatment, that the original shape was not maintained (the edge portion peeled off in Comparative Example 3 and collapse was observed in Comparative Examples 4 and 5). This fact indicates that bonding between the cubic boron nitride particles is insufficient and the structure is discontinuous. For this reason, the composition and the existence probability of the binder at the bonding interface between the cubic boron nitride particles could not be measured (therefore, denoted as "-" in Table 1). In addition, as the commercially available product was used, transverse rupture strength could not be measured in these comparative examples.

As a result of the cutting test, the cutting tools in Examples 1 to 5 had the tool life twice as long as that of the cutting tool in Comparative Examples 1 to 5. This fact indicates that each composite sintered body in the examples contains cubic boron nitride having the continuous structure as a result of bonding of a plurality of cubic boron nitride particles to each other and the binder having the continuous structure as a result of bonding of a plurality of binder particles to each other, so that excellent heat resistance and toughness are both attained and hence the tool life is significantly extended.

### <Example 6>

The cubic boron nitride powders used in Example 1 were subjected to hydrogen plasma treatment with microwave plasma for 30 minutes at a temperature of 1000°C in a hydrogen flow under a reduced pressure of 1.333×10⁴Pa (100torr) using a microwave reactor. Thereafter, the powders thus obtained were again stirred, and the hydrogen plasma treatment under the same condition as above was repeated five times, thus obtaining the cubic boron nitride powders having the surface treated.

The composite sintered body according to the present invention was obtained under the manufacturing condition the same as in Example 1, except that the cubic boron nitride powders thus obtained were used instead of the cubic boron nitride powders used in Example 1. Table 2 below shows each performance obtained as a result of measurement or test for the composite sintered body as in Example 1.

### <Example 7>

The cubic boron nitride powders used in Example 4 were subjected to heat treatment for 30 minutes at a temperature of 1200°C in an ammonia atmosphere, thus obtaining the cubic boron nitride powders having the surface treated.

The composite sintered body according to the present invention was obtained under the manufacturing condition the same as in Example 4, except that the cubic boron nitride powders thus obtained were used instead of the cubic boron nitride powders used in Example 4. Table 2 below shows each performance obtained as a result of measurement or test for the composite sintered body as in Example 1.

### <Example 8>

The composite sintered body according to the present invention was obtained under the manufacturing condition the same as in Example 1, except that the raw material powders for the binder and the cubic boron nitride powders having an average particle size of 3.8µm in Example 1 were homogenously mixed using the ball mill at such a blending ratio that the cubic boron nitride powders accounted for 65 volume %, thereafter degassing was performed under the condition the same as in Example 1, and 3 mass % melamine resin powders (commercially available product) were added to the degassed, mixed powders. Table 2 below shows each performance obtained as a result of measurement or test for the composite sintered body as in Example 1.

**Table 2**

| No. | | cBN [volume %] | Thermal Conductivity [W/(m·K)] | Binder Present at Bonding Interface Between cBN Particles | | Initial XRD Measurement | XRD Measurement After Acid Treatment | Appearance After Acid Treatment | Transverse Rupture Strength After Acid Treatment | Tool Life In Cutting Test |
|---|---|---|---|---|---|---|---|---|---|---|
| | | | | Element | Existence Probability [%] | | | | | |
| Example | 6 | 70 | 80 | Ti, Al | 15 | cBN, TiN, TiB₂, AlN, AlB₂ | cBN | original shape maintained | 12.7 [gf/mm²] | 7.8 minutes |
| | 7 | 75 | 88 | - | 0 | cBN, TiN, TiB₂, AlN, AlB₂ | cBN | original shape maintained | 15.2 [gf/mm²] | 8.5 minutes |
| | 8 | 65 | 76 | Ti, Al | 25 | cBN, TiN, TiB₂, AlN, AlB₂, Al₂O₃ | cBN, Al₂O₂ | original shape maintained | 5.6 [gf/mm²] | 3.5 minutes |

| | | | | | | | | | | |
|---|---|---|---|---|---|---|---|---|---|---|
| In the table above, "cBN" represents "cubic boron nitride." | | | | | | | | | | |

As can clearly be seen from the result in Table 2, in all the composite sintered bodies in Examples 6 to 8 above, cubic boron nitride has the continuous structure as a result of bonding of a plurality of cubic boron nitride particles to each other, and the binder has the continuous structure as a result of bonding of a plurality of binder particles to each other.

In addition, the cutting tool using the composite sintered bodies according to Examples 6 to 8 had the tool life further longer than the cutting tool using the composite sintered bodies according to Examples 1, 4 and 5 having corresponding contents of cubic boron nitride. Moreover, in the composite sintered bodies according to Examples 6 to 8, the existence probability of the binder at the bonding interface where the cubic boron nitride particles are bonded to each other is further lower than that in the composite sintered bodies according to Examples 1, 4 and 5. Therefore, the composite sintered bodies according to Examples 6 to 8 were superior in thermal conductivity to the composite sintered bodies according to Examples 1, 4 and 5. It appears that such a result was obtained for the following reasons.

Specifically, in Example 6, it is considered that oxygen was effectively removed at the surface of the cubic boron nitride powder having the surface treated in hydrogen plasma treatment and that the surface was simultaneously terminated with hydrogen group. In addition, the reason why the result as above was obtained is estimated as follows. Specifically, the hydrogen group present at the surface in this manner attained a catalytic function at the high temperature and high pressure, and bonding strength between the cubic boron nitride particles was further strengthened.

Meanwhile, in Example 7, it is considered that oxygen was effectively removed at the surface of the cubic boron nitride powder having the surface treated in ammonia treatment and that the surface was simultaneously terminated with amino group. In addition, the reason why the result as above was obtained is estimated as follows. Specifically, the amino group present at the surface in this manner attained a catalytic function at the high temperature and high pressure, and bonding strength between the cubic boron nitride particles was further strengthened.

In Example 8, it is considered that carbon free radical (such as -CH₃ group), hydrogen free radical (such as -H group), and nitrogen free radical (such as -NH₂ group) were present around the cubic boron nitride particles, as a result of addition of 3 mass % melamine powders. The carbon free radical is considered to attain a function to remove an oxygen impurity such as B₂O₃ or the like present at the surface of the cubic boron nitride particles as a result of reaction to the same, and the hydrogen free radical and the nitrogen free radical are considered to attain a catalytic function to promote polycrystallization of cubic boron nitride. It is estimated that the result as above was obtained because the bonding strength between the cubic boron nitride particles was strengthened.

### <Example 9>

Initially, Ti_{X}N_{Y} (where X=0.5 and Y=0.25) powders and Al powders were homogenously mixed at a mass ratio of 80:20, and thereafter the mixed powders were subjected to heat treatment for 30 minutes at a temperature of 1200°C in vacuum using a vacuum furnace. Thereafter, a ball mill constituted of a pot made of hardmetal and a ball made of hardmetal was used to break the mixed powders that were subjected to heat treatment as described above, thus obtaining the raw material powders for the binder.

Successively, the raw material powders for the binder obtained as above and the cubic boron nitride powders having an average particle size of 2.8µm were homogenously mixed using the ball mill, at such a blending ratio that the cubic boron nitride powders accounted for 80 volume %. Thereafter, the mixed powders were held in the vacuum furnace for 20 minutes at a temperature of 900°C for degassing.

Then, the mixed powders degassed as above were sandwiched between the metal foils made of TiAl alloy (Ti (50 atomic %) Al (50 atomic %)) and filled in the capsule made of molybdenum (Mo). Thereafter, the pressure and the temperature were simultaneously raised to 3.5GPa and 1200°C using an ultra-high pressure apparatus respectively, and the mixed powders were maintained for 1.5 minute under this pressure and temperature condition (first pressurization and temperature increase).

Successively, the pressure and the temperature were simultaneously raised to 6.5GPa and 1850°C using this apparatus respectively (second pressurization and temperature increase), and the mixed powders were maintained for 15 minutes under this pressure and temperature condition for sintering. The composite sintered body according to the present invention at least containing cubic boron nitride and the binder was thus manufactured. The composite sintered body was subjected to initial XRD measurement, thermal conductivity measurement (before acid treatment), XRD measurement after acid treatment, observation of appearance after acid treatment, and measurement of transverse rupture strength after acid treatment as in Example 1. Table 3 below shows the result.

### <Example 10>

The composite sintered body according to the present invention was manufactured as in Example 9, except that blending ratio of the cubic boron nitride powders was set to 77 volume % and the powders were homogenously mixed in Example 9. Table 3 below shows each performance of the composite sintered body measured as in Example 9.

### <Example 11>

The composite sintered body according to the present invention was manufactured as in Example 9, except that blending ratio of the cubic boron nitride powders was set to 72 volume % and the powders were homogenously mixed in Example 9. Table 3 below shows each performance of the composite sintered body measured as in Example 9.

### <Example 12>

The composite sintered body according to the present invention was manufactured as in Example 9, except that blending ratio of the cubic boron nitride powders was set to 65 volume % and the powders were homogenously mixed in Example 9. Table 3 below shows each performance of the composite sintered body measured as in Example 9.

### <Example 13> (Reference Example)

The composite sintered body according to the present invention was manufactured as in Example 9, except that blending ratio of the cubic boron nitride powders was set to 65 volume %, the powders were homogenously mixed and duration in which the condition of the pressure of 6.5GPa and the temperature of 1850°C was maintained was set to 60 minutes in Example 9. Table 3 below shows each performance of the composite sintered body measured as in Example 9.

### <Example 14>

The composite sintered body according to the present invention was manufactured as in Example 9, except that blending ratio of the cubic boron nitride powders was set to 65 volume %, the powders were homogenously mixed and duration in which the condition of the pressure of 6.5GPa and the temperature of 1850°C was maintained was set to 40 minutes in Example 9. Table 3 below shows each performance of the composite sintered body measured as in Example 9.

### <Example 15>

The composite sintered body according to the present invention was manufactured as in Example 9, except that blending ratio of the cubic boron nitride powders was set to 65 volume %, the powders were homogenously mixed and duration in which the condition of the pressure of 6.5GPa and the temperature of 1850°C was maintained was set to 20 minutes in Example 9. Table 3 below shows each performance of the composite sintered body measured as in Example 9.

### <Example 16>

The composite sintered body according to the present invention was manufactured as in Example 9, except that blending ratio of the cubic boron nitride powders was set to 65 volume %, the powders were homogenously mixed and the condition in the second pressurization and temperature increase was set to 5.5GPa and 1850°C and this condition was maintained for 10 minutes in Example 9. Table 3 below shows each performance of the composite sintered body measured as in Example 9.

### <Example 17>

The composite sintered body according to the present invention was manufactured as in Example 9, except that blending ratio of the cubic boron nitride powders was set to 65 volume %, the powders were homogenously mixed, the condition in the second pressurization and temperature increase was set to 5.5GPa and 1700°C, this condition was maintained for 15 minutes in Example 9. Table 3 below shows each performance of the composite sintered body measured as in Example 9.

### <Example 18> (Reference Example)

The composite sintered body according to the present invention was manufactured as in Example 9, except that blending ratio of the cubic boron nitride powders was set to 65 volume %, the powders were homogenously mixed, the condition in the second pressurization and temperature increase was set to 5.5GPa and 1550°C, this condition was maintained for 15 minutes in Example 9. Table 3 below shows each performance of the composite sintered body measured as in Example 9.

### <Comparative Example 6>

The composite sintered body according to the comparative example was manufactured as in Example 9, except that blending ratio of the cubic boron nitride powders was set to 65 volume % and the powders were homogenously mixed in Example 9, except that the metal foil made of TiAl alloy (Ti (50 atomic %) Al (50 atomic %)) for filling the capsule made of molybdenum (Mo) with the mixed powders was not used, and except that sintering was performed for 30 minutes under such a condition that the pressure was raised to 5.5GPa at a room temperature and thereafter the temperature was raised to 1550°C as in the conventional method instead of the condition for sintering in Example 9. Table 3 below shows each performance of the composite sintered body measured as in Example 9.

**Table 3**

| No. | | cBN [volume %] | Thermal Conductivity [W/(m·K)] | Initial XRD Measurement | XRD Measurement After Acid Treatment | Appearance After Acid Treatment | Transverse Rupture Strength After Acid Treatment [kpf/mm²] |
|---|---|---|---|---|---|---|---|
| Example | 9 | 80 | 150 | cBN, TiN, TiB₂, AlN, AlB₂, Al₂O₃, AlON | cBN, Al₂O₃ | original shape maintained | 70 |
| | 10 | 77 | 95 | cBN, TiN, TiB₂, AlN, AlB₂, Al₂O₃, AlON | cBN, Al₂O₃ | original shape maintained | 10 |
| | 11 | 72 | 85 | cBN, TiN, TlB₂, AlN, AlB₂, Al₂O₂, AlON | cBN, Al₂O₃ | original shape maintained | 1 |
| | 12 | 65 | 77 | cBN, TiN, TiB₂, AlN, AlB₂, Al₂O₃, AlON | cBN, Al₂O₃ | original shape maintained | 0.01 |
| | *13 | 65 | 120 | cBN, TiN, TiB₂, AlN, AlB₂, Al₃O₃, AlON | cBN, Al₂O₃ | original shape maintained | 0.01 |
| | 14 | 65 | 100 | cBN, TiN, TlB₂, AlN, AlB₂, Al₂O₃, AlON | cBN, Al₂O₃ | original shape maintained | 0.01 |
| | 15 | 65 | 95 | cBN, TiN, TiB₂, AlN, AlB₂, Al₂O₃, AlON | cBN, Al₂O₃ | original shape maintained | 0.01 |
| | 16 | 65 | 72 | cBN, TiN, TiB₂, AlN, AlB₂, Al₂O₃, AlON | cBN, | original shape maintained | 0.008 |
| | 17 | 65 | 70 | cBN, TiN, TiB₂, AlN, AlB₂, Al₂O₃, AlON | cBN, Al₂O₃ | original shape maintained | 0.006 |
| | *18 | 65 | 65 | cBN, TiN, TiB₂. AlN, AlB₂, Al₂O₃, AlON | cBN, Al₂O₃ | original shape maintained | 0.001 |
| Comparative Example | 6 | 65 | 50 | cBN, TiN, TiB₂, AlN, AlB₂, Al₂O₃ | cBN, Al₂O₃ | collapsed | not available |

| | | | | | | | |
|---|---|---|---|---|---|---|---|
| In the table above, "cBN" represents "cubic boron nitride." *Reference Examples. | | | | | | | |

As can clearly be seen from the result in Table 3, in all the composite sintered bodies according to Examples 9 to 18 above, cubic boron nitride has the continuous structure as a result of bonding of a plurality of cubic boron nitride particles to each other, and the binder has the continuous structure as a result of bonding of a plurality of binder particles to each other.

On the other hand, in Comparative Example 6, collapse of the shape was confirmed in observation of appearance after acid treatment. Therefore, this fact indicates that the cubic boron nitride particles have the discontinuous structure, not the continuous structure. Accordingly, the comparative example has lower thermal conductivity and poorer tool life in the cutting test which will be described later, as compared with those in each example.

The composite sintered bodies obtained in Examples 9 to 18 and Comparative Example 6 were subjected to TEM (transmission electron microscope) observation, so as to measure an average particle size of the aluminum compound contained in the binder particle, as well as to EDS analysis and AES analysis, so as to conduct element analysis, thus measuring the ratio in the binder. Table 4 below shows the result.

Meanwhile, the cutting tool was fabricated using the composite sintered body (before acid treatment) obtained in Examples 9 to 18 and Comparative Example 6. Specifically, each composite sintered body manufactured as above was brazed to a base material made of hardmetal and formed in a prescribed shape (ISO model No. SNGA120408), to fabricate the cutting tool. Using this cutting tool, a cutting test in which the cutting tool was used to rough-cut bearing steel was conducted under the conditions below, so as to determine the tool life until it is chipped. Table 4 below shows the result.

### <Condition for Cutting Test>

Work material: Bearing steel SUJ2, HRC63
   (diameter 100mm × length 300mm; round rod)
Cutting speed: V=100m/min.
Feed rate: f=0.15mm/rev.
Depth of cut: d=0.4mm
Wet/Dry: Dry

**Table 4**

| No. | | Average Particle Size of Aluminum Compound | Ratio of Al_{X}O_{Y}N_{Z} in Binder | Ratio of Al_{S}B_{T}O_{U}N_{V} in Binder | Total Ratio of Al_{X}O_{Y}N_{Z} and Al_{S}BᵣO_{U}N_{V} in Binder | Tool Life In Cutting Test |
|---|---|---|---|---|---|---|
| Example | 9 | 0.5µm | 17 volume % | 8 volume % | 25 volume % | 12.5 minutes |
| | 10 | 0.6µm | 16 volume % | 6 volume % | 22 volume % | 21.5 minutes |
| | 11 | 0.5µm | 15 volume % | 5 volume % | 20 volume % | 21.5 minutes |
| | 12 | 0.5µm | 15 volume % | 3 volume % | 18 volume % | 19 minutes |
| | *13 | 2.5µm | 28 volume % | 7 volume % | 35 volume % | 10.5 minutes |
| | 14 | 1µm | 22 volume % | 5 volume % | 27 volume % | 17.5 minutes |
| | 15 | 0.7µm | 20 volume % | 4 volume % | 24 volume % | 20 minutes |
| | 16 | 80nm | 7 volume % | 1.5 volume % | 8.5 volume % | 18 minutes |
| | 17 | 50nm | 4 volume % | 1 volume % | 5 volume % | 17.5 minutes |
| | *18 | 40nm | 2.5 volume % | 1 volume % | 3.5 volume % | 10 minutes |
| Comparative Example | 6 | 21nm | 2 volume % | 0 volume % | 2 volume % | 3 minutes |

| | | | | | | |
|---|---|---|---|---|---|---|
| *Reference Examples | | | | | | |

As a result of EDS analysis and AES analysis, Al_{X}O_{Y}N_{Z} and Al_{S}B_{T}O_{U}N_{V} were detected at the interface between cubic boron nitride and the binder, and Al_{X}O_{Y}N_{Z} was detected at the interface between the binder particles. It is estimated that Al_{S}B_{T}O_{U}N_{V} was not detected in XRD measurement because, among the aluminum compounds that are the binder components, Al_{S}B_{T}O_{U}N_{V} was probably present in an amorphous state.

As a result of the cutting test, Examples 9 to 18 proved to have a longer tool life than Comparative Example 6. This may be because both of cubic boron nitride and the binder in the composite sintered body in each example had the continuous structure.

It is considered that the strength of the composite sintered body was lower in Reference Example 13 than in other examples, because the average particle size of the aluminum compound was larger than in other examples. In addition, the ratio of Al_{X}O_{Y}N_{Z} and Al_{S}B_{T}O_{U}N_{V} in the binder exceeded 30 volume % in Reference Example 13, and it is considered that the content of the binder component having relatively good toughness other than the aluminum compound was low. Therefore, it is estimated that the tool life in Reference Example 13 was shorter than in other examples.

Meanwhile, it is considered that thermal conductivity of the composite sintered body was lower in Reference Example 18 than in other examples, because the average particle size of the aluminum compound was smaller than that in other examples. In addition, the ratio of Al_{X}O_{Y}N_{Z} and Al_{S}B_{T}O_{U}N_{V} in the binder was lower than 5 volume % in Reference Example 18, and it is considered that most of the aluminum compound was present as AlN and Al₂O₃. Therefore, it is estimated that the tool life in Reference Example 18 was shorter than in other examples.

Summarizing the results above, it is understood that the longer tool life is achieved if the composite sintered body according to the present invention containing at least one of Al_{X}O_{Y}N_{Z} and Al_{S}B_{T}O_{U}N_{V}, that has an average particle size of at least 50nm to at most 1µm and is contained in the binder by at least 5 volume % to at most 30 volume % as the aluminum compound in the binder, is used in the cutting tool. This may be because Al_{X}O_{Y}N_{Z} and Al_{S}B_{T}O_{U}N_{V} contribute to improvement in heat resistance and toughness of the composite sintered body as described above.

It should be understood that the embodiments and examples disclosed herein are illustrative and non-restrictive in every respect. The scope of the present invention is defined by the terms of the claims, rather than the description above.

## Claims

1. A composite sintered body (4), comprising at least cubic boron nitride and a binder, wherein:
said cubic boron nitride has a continuous structure as a result of bonding of a plurality of cubic boron nitride particles (1) to each other;
said binder has a continuous structure as a result of bonding of a plurality of binder particles (2) to each other, that are present in a region except for a bonding interface where said cubic boron nitride particles (1) are bonded to each other; and
said binder contains at least one of a compound and a solid solution of any one element or two or more elements of Ti, Zr, Hf, V, and Cr and any one element or two or more elements of nitrogen, carbon, boron, and oxygen, and an aluminum compound,
**characterised in that** said aluminum compound is implemented by a compound of aluminum, oxygen and nitrogen and/or a compound of aluminum, oxygen, nitrogen, and boron, said aluminum compound has an average particle size of at least 50nm to at most 1µm, and a ratio of said aluminum compound in said binder is at least 5 volume % to at most 30 volume %.

2. The composite sintered body (4) according to claim 1, having thermal conductivity of at least 70W/(m·K) to at most 150W/(m·K).

3. The composite sintered body (4) according to claim 1, wherein
said binder is present at the bonding interface where said cubic boron nitride particles (1) are bonded to each other at existence probability of at most 60%, and said binder is present as a part of the continuous structure as a result of continuity to the continuous structure of said binder particles (2) or as a discontinuous structure isolated from the continuous structure of said binder particles (2).

4. The composite sintered body (4) according to claim 3, wherein
said binder has composition containing at least Ti or Al at the bonding interface where said cubic boron nitride particles (1) are bonded to each other.

5. The composite sintered body (4) according to claim 1, wherein
said binder is absent at the bonding interface where said cubic boron nitride particles (1) are bonded to each other.

6. The composite sintered body (4) according to claim 1, having transverse rupture strength after acid treatment of at least 1gf/mm² to at most 70kgf/mm².

7. The composite sintered body (4) according to claim 1, wherein substantially no compound other than cubic boron nitride and Al₂O₃ is detected in X-ray diffraction measurement after acid treatment.

8. The composite sintered body (4) according to claim 1, wherein
said cubic boron nitride is contained in said composite sintered body (4) by at least 60 volume % to at most 85 volume %.

9. The composite sintered body (4) according to claim 1, wherein
said cubic boron nitride particle (1) has an average particle size of at least 2µm to at most 10µm.

10. The composite sintered body (4) according to claim 1, having thermal conductivity of at least 60W/(m·K) to at most 150W/(m·K).

11. A cutting tool at least partially containing the composite sintered body (4) according to claim 1.

## Patentansprüche

1. Verbundsinterkörper (4), der mindestens kubisches Bornitrid und ein Bindemittel umfasst, wobei:
das kubische Bornitrid eine kontinuierliche Struktur infolge der Bindung einer Vielzahl von kubischen Bornitridteilchen (1) aneinander aufweist;
das Bindemittel eine kontinuierliche Struktur infolge der Bindung einer Vielzahl von Bindemittelteilchen (2) aneinander aufweist, die in einem Bereich vorliegen, von dem die Bindungsgrenzfläche, an der die kubischen Bornitridteilchen (1) miteinander verbunden sind, ausgeschlossen ist; und
das Bindemittel mindestens eines enthält, ausgewählt aus einer Verbindung und einem Mischkristall aus einem Element oder zwei oder mehreren Elementen, ausgewählt aus Ti, Zr, Hf, V, und Cr, und einem Element oder zwei oder mehreren Elementen, ausgewählt aus Stickstoff, Kohlenstoff, Bor, und Sauerstoff, und einer Aluminiumverbindung,
**dadurch gekennzeichnet, dass** die Aluminiumverbindung als Verbindung aus Aluminium, Sauerstoff und Stickstoff, und/oder als Verbindung aus Aluminium, Sauerstoff, Stickstoff und Bor vorliegt, wobei die Aluminiumverbindung eine mittlere Teilchengröße von mindestens 50 nm bis höchstens 1 µm aufweist und der Anteil der Aluminiumverbindung im Bindemittel mindestens 5 Vol.-% bis höchstens 30 Vol.-% beträgt.

2. Verbundsinterkörper (4) gemäß Anspruch 1, der eine Wärmeleitfähigkeit von mindestens 70 W/(m·K) bis höchstens 150 W/(m·K) aufweist.

3. Verbundsinterkörper (4) gemäß Anspruch 1, wobei das Bindemittel an der Bindungsgrenzfläche, an der die kubischen Bornitridteilchen (1) miteinander verbunden sind, mit einer Auftrittswahrscheinlichkeit von höchstens 60% vorliegt und das Bindemittel als Teil der kontinuierlichen Struktur infolge der Kontinuität der kontinuierlichen Struktur der Bindemittelteilchen (2) oder in Form einer diskontinuierlichen Struktur, die isoliert ist von der kontinuierlichen Struktur der Bindemittelteilchen (2), vorliegt.

4. Verbundsinterkörper (4) gemäß Anspruch 3, wobei das Bindemittel eine Zusammensetzung aufweist, die mindestens Ti oder Al an der Bindungsgrenzfläche, an der die kubischen Bornitridteilchen (1) miteinander verbunden sind, enthält.

5. Verbundsinterkörper (4) gemäß Anspruch 1, wobei das Bindemittel nicht an der Bindungsgrenzfläche, an der die kubischen Bornitridteilchen (1) miteinander verbunden sind, vorliegt.

6. Verbundsinterkörper (4) gemäß Anspruch 1, der eine Biegebruchfestigkeit nach einer Säurebehandlung von mindestens 1 gf/mm² bis höchstens 70 kgf/mm² aufweist.

7. Verbundsinterkörper (4) gemäß Anspruch 1, wobei nach einer Säurebehandlung im Wesentlichen keine andere Verbindung außer kubisches Bornitrid und Al₂O₃ mittels Röntgenbeugungsmessung nachgewiesen wird.

8. Verbundsinterkörper (4) gemäß Anspruch 1, wobei das kubische Bornitrid im Verbundsinterkörper (4) zu mindestens 60 Vol.-% bis höchstens 85 Vol.-% enthalten ist.

9. Verbundsinterkörper (4) gemäß Anspruch 1, wobei die kubischen Bornitridteilchen (1) eine mittlere Teilchengröße von mindestens 2 µm und höchstens 10 µm aufweisen.

10. Verbundsinterkörper (4) gemäß Anspruch 1, der eine Wärmeleitfähigkeit von mindestens 60 W/(m·K) bis höchstens 150 W/(m·K) aufweist.

11. Schneidwerkzeug, das mindestens teilweise den Verbundsinterkörper (4) gemäß Anspruch 1 enthält.

## Revendications

1. Corps fritté composite (4) comprenant au moins du nitrure de bore cubique et un liant, dans lequel :
ledit nitrure de bore cubique a une structure continue à cause d'une liaison d'une pluralité de particules de nitrure de bore cubique (1) entre elles ;
ledit liant a une structure continue à cause d'une liaison d'une pluralité de particules de liant (2) entre elles, qui sont présentes dans une région, excepté pour une interface de liaison où lesdites particules de nitrure de bore cubique (1) sont reliées entre elles ; et
ledit liant contient au moins l'un parmi un composé et une solution solide de n'importe quel élément ou de deux éléments ou plus parmi Ti, Zr, Hf, V et Cr et n'importe quel élément ou deux éléments ou plus parmi l'azote, le carbone, le bore et l'oxygène, et un composé d'aluminium,
**caractérisé en ce que** ledit composé d'aluminium est mis en oeuvre par un composé d'aluminium, d'oxygène et d'azote et/ou un composé d'aluminium, d'oxygène, d'azote et de bore, ledit composé d'aluminium a une taille de particule moyenne d'au moins 50 nm à 1 µm au maximum, et un rapport dudit composé d'aluminium dans ledit liant est d'au moins 5 % en volume à 30 % en volume au maximum.

2. Corps fritté composite (4) selon la revendication 1, présentant une conductivité thermique d'au moins 70 W /(m.K) à 150 W / (m.K) au maximum.

3. Corps fritté composite (4) selon la revendication 1, dans lequel :
ledit liant est présent au niveau de l'interface de liaison où lesdites particules de nitrure de bore cubique (1) sont reliées entre elles à une probabilité d'existence de 60 % au maximum, et ledit liant est présent comme faisant partie de la structure continue à cause de la continuité par rapport à la structure continue desdites particules de liant (2) ou comme étant une structure discontinue isolée de la structure continue desdites parties de liant (2).

4. Corps fritté composite (4) selon la revendication 3, dans lequel :
ledit liant a une composition contenant au moins Ti ou Al au niveau de l'interface de liaison où lesdites particules de nitrure de bore cubique (1) sont reliées entre elles.

5. Corps fritté composite (4) selon la revendication 1, dans lequel :
ledit liant est absent au niveau de l'interface de liaison où lesdites particules de nitrure de bore cubique (1) sont reliées entre elles.

6. Corps fritté composite (4) selon la revendication 1, ayant une résistance à la rupture transversale après traitement à l'acide d'au moins 1gf/mm² à 70kgf/mm² au maximum.

7. Corps fritté composite (4) selon la revendication 1, dans lequel sensiblement aucun composé différent du nitrure de bore cubique et du Al₂O₃ n'est détecté lors de la mesure par diffraction par rayons après le traitement à l'acide.

8. Corps fritté composite (4) selon la revendication 1, dans lequel :
ledit nitrure de bore cubique est contenu dans ledit corps fritté composite (4) selon au moins 60 % en volume jusqu'à 85 % en volume au maximum.

9. Corps fritté composite (4) selon la revendication 1, dans lequel :
ladite particule de nitrure de bore cubique (1) a une taille de particule moyenne d'au moins 2 µm à 10 µm au maximum.

10. Corps fritté composite (4) selon la revendication 1, ayant une conductivité thermique d'au moins 60 W / (m.K) à 150 W / (m.K) au maximum.

11. Outil de coupe contenant au moins partiellement le corps fritté composite (4) selon la revendication 1.
